# EUROPEAN PATENT SPECIFICATION

(11) **EP 3 622 865 B1**
(45) Date of publication and mention of the grant of the patent: **30.12.2020**
(21) Application number: 18204863.7
(22) Date of filing: 07.11.2018
(51) Int. Cl.: A47J 37/08

(54) **AUTOMATIC FLIP TOASTER**
AUTOMATISCHER WENDETOASTER
GRILLE-PAIN RABATTABLE AUTOMATIQUE

(30) Priority: 13.09.2018 CN 201811068125
(43) Date of publication of application: 18.03.2020
(73) Proprietor: Jiangmen City Xinhui Henglong Innovative Housewares, Co., Ltd., 529100 Jiangmen Guangdong (CN)
(72) Inventor: Nie, Huayao, Jiangmen, Guangdong 529100 (CN)
(74) Representative: Sarpi, Maurizio

(56) References cited:
- DE-U1-202005 002 363
- US-A- 1 952 763
- US-A1- 2011 179 953

## Description

### FIELD OF THE INVENTION

The present disclosure relates to a toaster, belonging to the technical field of ovens device.

### BACKGROUND OF THE INVENTION

Flip toaster is a household appliance in which pieces of bread are placed flatwise in the toaster body for baking. Since the pieces of bread are placed flatwise, a proper amount of butter, tomato sauce or the like can be applied onto the pieces of bread during baking, making the pieces of bread richer in taste. Therefore, the flip toaster becomes more and more popular in the market.

However, the existing toasters currently available in the market can be merely used for baking flat pieces of bread. They are large in size and waste in electricity. Moreover, the cover of the toaster can only be opened or closed manually, so it is not very convenient to use. Additionally, since the cover can only be flipped backward, more space is required. Therefore, it is necessary to improve and optimize the existing toasters. A toaster disclosing the preamble of claim 1 is known from US2011/179953.

### SUMMARY OF THE INVENTION

In order to overcome the deficiencies in the prior art, it provides that an automatic flip toaster which realizes the automatic opening or closing of a cover body, so as to be more convenient to use and more compact in structure and therefore a reduced size.

The technical solutions for solving the technical problems are described as follows.

According to : the invention, an automatic flip toaster comprises a toaster body, a cover body rotatably connected to a rear portion of the toaster body and a control system, wherein: a wire rack is provided in the toaster body; heating tubes are provided in the toaster body below the wire rack and on a lower side of the cover body; a driving motor, a reduction gearbox connected to the driving motor and a steering gearbox connected to the reduction gearbox are internally provided in the rear portion of the toaster body; an output end of the steering gearbox is connected to a rotation shaft of the cover body, and a rotation limiting device is provided on an outer end cover; and, all the heating tubes, the driving motor and the rotation limiting device are electrically connected to the control system.

In an additional aspect of the present disclosure, the reduction gearbox comprises an outer gear ring and a planet gear set engaged with the outer gear ring. An input end cover and an output end cover are provided at two ends of the outer gear ring, respectively. An input through hole and an output through hole are formed on the input end cover and the output end cover, respectively. An output shaft of the driving motor is connected to one end of the planet gear set through the input through hole. A low-speed shaft at the other end of the planet gear set passes through the output through hole and is then positioned within the output through hole by an output bearing.

In an additional aspect of the present disclosure, the steering gearbox comprises a box body and a first gear, a second gear and a third gear which are arranged in the box body and successively engaged with each other. The outer end cover is covered on the box body; the first gear is connected to the reduction gearbox; and, the rotation shaft is connected to the third gear.

In an additional aspect of the present disclosure, the rotation limiting device comprises a small semi-circular projection and a large semi-circular projection which are arranged opposite to each other on the outer end cover; limiting switches are provided at clearances between the small semi-circular projection and two ends of the large semi-circular projection. A circular rotation block which is fitted with the small semi-circular projection and driven to rotate by the steering gearbox is further provided within the small semi-circular projection. A 90° sector block which is integrated with the circular rotation block and fitted with the large semi-circular projection is provided in an outer circle of the rotation block. The limiting switches are electrically connected to the control system.

In an additional aspect of the present disclosure, an electromagnetic clutch electrically connected to the control system is further provided between the reduction gearbox and the steering gearbox. Two ends of the electromagnetic clutch are connected to the reduction gearbox and the steering gearbox, respectively.

In an additional aspect of the present disclosure, the electromagnetic clutch comprises a driven clutch disc in axially movable connection to the reduction gearbox and a driving clutch disc connected to the steering gearbox. Clutch teeth engaged and fitted with each other are formed on end faces of the driven clutch disc and the driving clutch disc. An electromagnet is provided on the driving clutch disc, and an iron chuck is provided on the driven clutch disc. The electromagnet is electrically connected to the control system.

In an additional aspect of the present disclosure, a crumb receiving port communicated with the inside is formed on one side of the toaster body, and a crumb receiving plate which can be pulled out from the crumb receiving port is provided in the toaster body below the heating tubes.

In an additional aspect of the present disclosure, cylindrical reflective tiles are provided above the heating tubes on the cover body, reflective sheets which are inclined downward in opposite directions are provided on two sides of the heating tubes on the toaster body. An anti-sticking mesh enclosure is provided on an outer side of each of the heating tubes.

In an additional aspect of the present disclosure, a resting edge is provided in an upper portion of the toaster body, and the wire rack is placed on the resting edge.
In an additional aspect of the present disclosure, a control panel connected to the control system is provided on the toaster body, and a display screen and control buttons are provided on the control panel.

The disclosure has the following beneficial effects that: the automatic flip toaster can realize the automatic opening or closing of the cover body of the toaster; it is not only convenient to use but also more compact in structure, thus effectively reducing the size of the toaster. Moreover, due to the provision of the rotation limiting device, the flip angle of the cover body can be limited so that the cover body stops flipping after flipping to a specified position, thereby reducing the occupied space of the cover body as much as possible.

### BRIEF DESCRIPTION OF THE DRAWINGS

The disclosure will be further described below by embodiments with reference to the accompanying drawings, wherein:
Fig. 1 is a schematic perspective view of a toaster according to the disclosure;
Fig. 2 is a schematic structural view of a cover body in an opened state according to the disclosure;
Fig. 3 is an exploded structural view of the toaster according to the disclosure;
Fig. 4 is an exploded structural view of a reduction gearbox and a steering gearbox according to the disclosure; and
Fig. 5 is a schematic structural view of a rotation limiting device according to the disclosure.

### DETAILED DESCRIPTION OF THE EMBODIMENTS

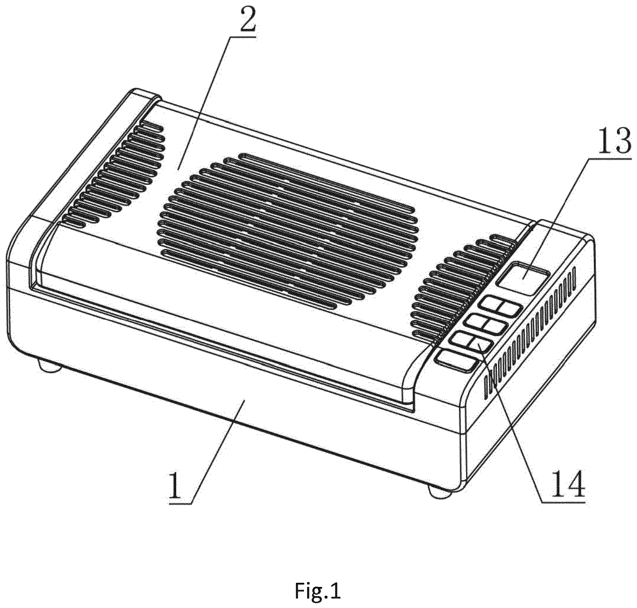

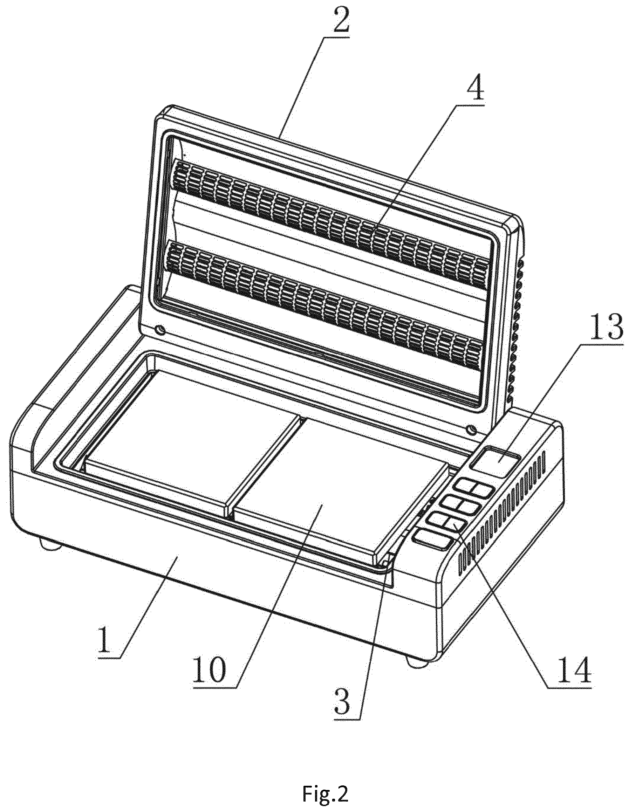

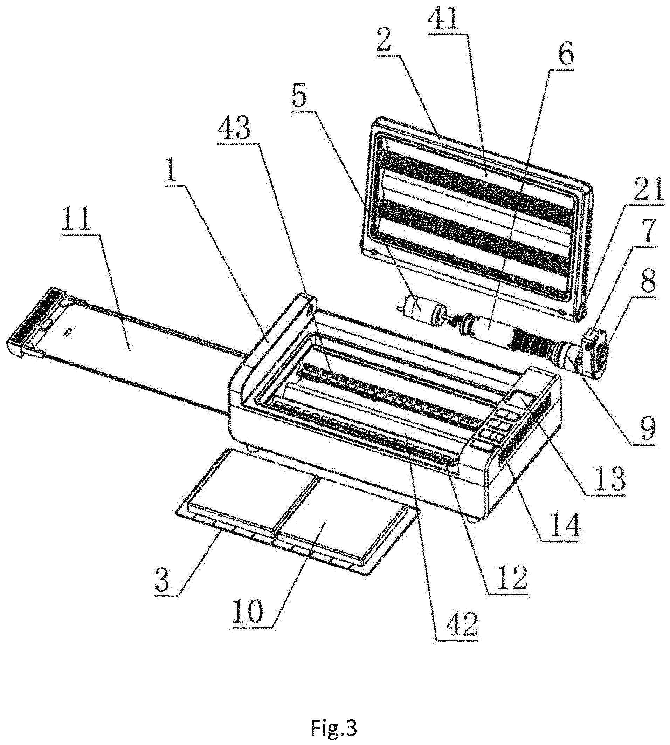

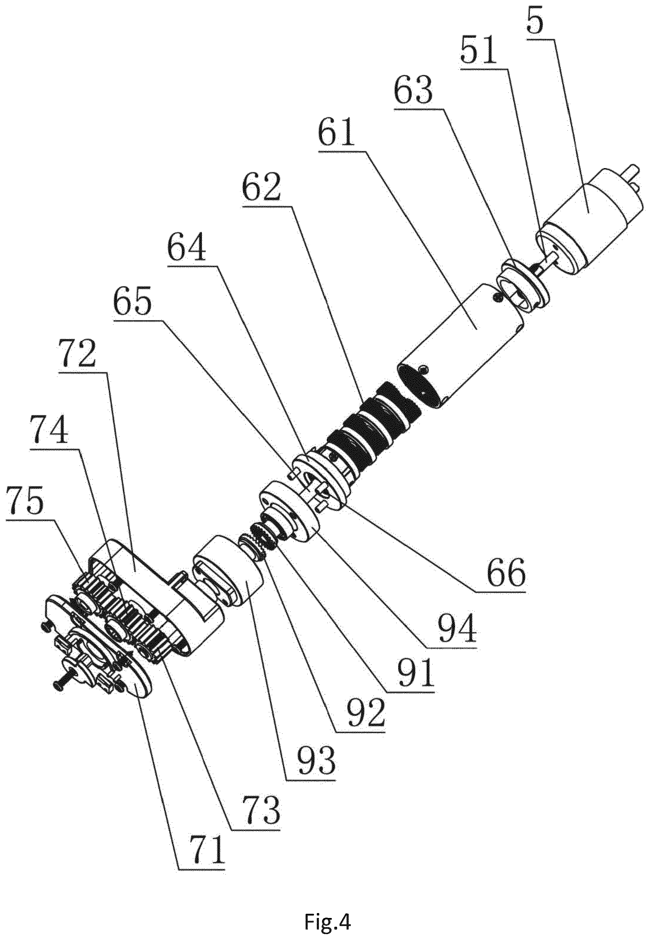

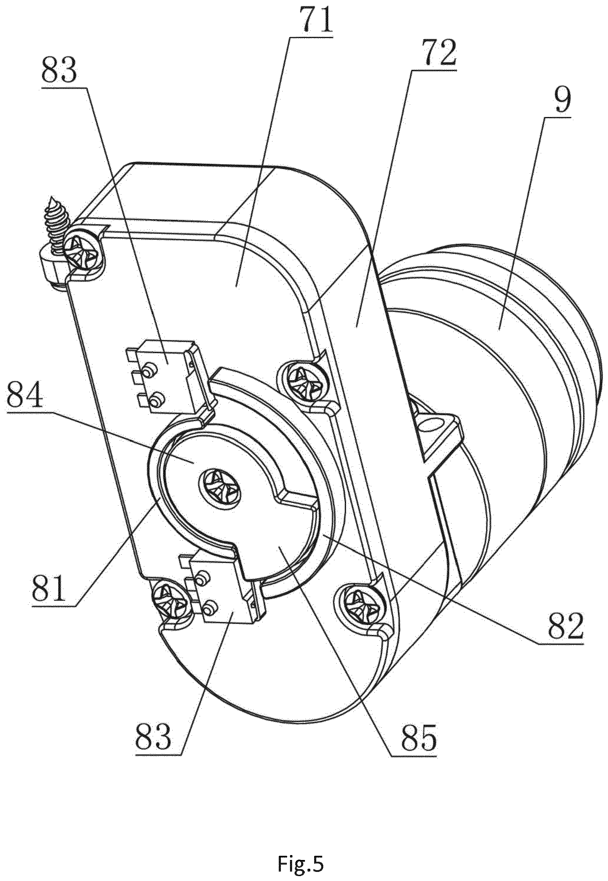

Figs. 1-5 show an automatic flip toaster comprises a toaster body 1 with a baking chamber, a cover body 2 rotatably connected to a rear portion of the toaster body 1 and covered above the baking chamber, and a control system. A wire rack 3 is provided in the toaster body 1, a resting edge 12 is provided in an upper portion of the toaster body 1, and the wire rack 3 is placed on the resting edge 12. The wire rack 3 can be conveniently installed and removed, so that it is convenient to clean and maintain the baking chamber of the toaster body 1. Heating tubes 4 are provided in the toaster body 1 below the wire rack 3 and on a lower side of the cover body 2. During baking, a piece of bread 10 is placed flatwise on the wire rack 3, the cover body 2 is closed, and the heating tube 4 on the upper and lower sides can simultaneously bake upper and lower surfaces of the piece of bread 10, so that the piece of bread is baked quickly and efficiently. In addition, the heating tubes 4 are electrically connected to the control system; a control panel connected to the control system is further provided on the toaster body 1; and, a display screen 13 and a control button 14 are provided on the control panel. There are a plurality of control buttons 14, including a cover body opening/closing button, a heating start/stop button or the like. The display screen 13 can display the baking time and temperature. The baking time is realized by a timer disposed in the control system. In order to display the temperature in real time, a temperature measurement probe in signal connection to the control system can also be provided in the baking chamber, and the temperature measured by the temperature measurement probe is displayed on the display screen 13 in real time by the control system for further reference by a user. Of course, in order to meet the baking demands of different users, heating tubes capable of adjusting the heating temperature can also be selected as the heating tubes 4. A control button 14 for adjusting the temperature is additionally provided on the control panel to realize temperature adjustment after the heating tubes are connected to the control system, so that the flexibility in use is improved.

In an embodiment, a crumb receiving port communicated with the inside is formed on one side of the toaster body 1, and a crumb receiving plate 11 that can be pulled out from the crumb receiving port is provided in the toaster body 1 below the heating tubes 4. Crumbs from the piece of bread 10 during baking and placing can directly fall into the crumb receiving plate 11. At the end of baking, it is convenient and efficient that the fallen bread crumbs can be cleared away as long as the crumb receiving plate 11 is pulled out, and it avoids a problem that the crumbs fallen into the baking chamber are difficult to clear away. An outer side of the crumb receiving plate 11 is designed to merge into one side of the toaster body 1. A groove convenient for pulling by a hand is formed on the lower edge of the outer side. In order to further prevent crumbs from falling outside of the crumb receiving plate 11, reflective sheets 42 which are inclined downward in opposite directions are provided on two sides of the heating tubes 4 on the toaster body 1. With this structure, the crumbs falling from the front and rear edges will also directly slip down from the reflective sheets 42 to the crumb receiving plate 11 below the heating tubes 4. As a result, the crumbs are prevented from falling into the baking chamber outside the edges of the crumb receiving plate 11, thus it is convenient to keep the inside of the baking chamber clean. In addition, cylindrical reflective tiles 41 are provided above the heating tubes 4 on the cover body 2. Both the cylindrical reflective tiles 41 and the reflective sheets 42 can reflect back light and heat radiating away from the piece of bread 10, so as to save the energy source to the greatest extent and reduce the energy loss and power waste. Meanwhile, an anti-sticking mesh enclosure 43 which can be removed and replaced is provided on an outer side of each of the heating tubes 4, so as to prevent the bread crumbs from adhering onto the heating tubes 4 to cause difficulty in cleaning and influencing the heating efficiency. One person only needs remove or replace the anti-sticking mesh enclosure 43 during cleaning the bread crumbs.

In an embodiment, in order to realize the automatic flip of the cover body 2, it provide a configuration that: a driving motor 5, a reduction gearbox 6 connected to the driving motor 5 and a steering gearbox 7 connected to the reduction gearbox 6 are internally provided in the rear portion of the toaster body 1; an output end of the steering gearbox 7 is connected to a rotation shaft 21 of the cover body 2, and a rotation limiting device 8 is provided on an outer end cover 71; and, both the driving motor 5 and the rotation limiting device 8 are electrically connected to the control system. During the connection, the driving motor 5, the reduction gearbox 6 and the steering gearbox 7 are axially connected successively and parallel to a rotation shaft 21 of the cover body 2. The rotation shaft 21 is integrated with the cover body 2, the reduction gearbox 6 is driven to reduce the rotation speed by the driving motor 6, and the rotation shaft 21 is eventually driven to rotate by the steering gearbox 7 so as to realize a flip action. The driving motor 5 is configured in such a wiring manner that it can rotate in both forward and backward directions, so that the automatic opening and closing of the cover body 2 is realized.

The automatic flip action can be controlled by the control buttons 14, or can also be automatically controlled by setting the baking time. As long as a time setting button is additionally provided on the control panel, the baking time can be set before baking by the time setting button. After the baking time reaches the set time, the control system will automatically start the driving motor 1 to open the cover body 2 and stop heating, so that the baked piece of bread can be taken out. By such an arrangement, the cover body 2 of the roaster can be opened and closed mutually, or the cover body 2 can be automatically opened at the end of baking, so that the manual operation and the automatic operation are realized.

By such a structure, the automatic opening/closing of the cover body of the roaster is realized, and it is convenient to operate and comfort in use. Due to the arrangement of the rotation limiting device 8, the flip angle of the cover body 2 can be limited so that the cover body 2 stops flipping after flipping to a specified position, thereby reducing the occupied space of the cover body as much as possible.

In an embodiment, the reduction gearbox 6 comprises an outer gear ring 61 and a planet gear set 62 engaged with the outer gear ring 61, wherein: an input end cover 63 and an output end cover 64 are provided at two ends of the outer gear ring 61, respectively; an input through hole and an output through hole are formed on the input end cover 63 and the output end cover 64, respectively; an output shaft 51 of the driving motor 5 is connected to one end of the planet gear set 62 through the input through hole; and, a low-speed shaft 65 at the other end of the planet gear set 62 passes through the output through hole and is then positioned within the output through hole by an output bearing 66.The reduction gearbox 6 realizes speed reduction by planet gears, so the size is reduced to the greatest extent while the transmission efficiency is ensured.

Consequently, it is convenient to mount the reduction gearbox 6 in the rear portion of the toaster body 1, the size of the roaster is reduced greatly, and the reduction gearbox has a high precision and a wide range of speed reduction. The planet gear set 62 comprises multiple stages of planet gears. The multi-stage speed reduction can efficiently reduce the rotation speed of the low-speed shaft 65 to a desired rotation speed. The low-speed shaft 65 is mounted within the output through hole by the bearing, so it is convenient to effectively improve the stability in rotation of the low-speed shaft.

In an additional embodiment, the steering gearbox 7 comprises a box body 72, and three gears 73, 74, 75 that are arranged in the box body and successively engaged with each other. The outer end cover 71 is covered on the box body 72; the first gear 73 is connected to the reduction gearbox 6; and, the rotation shaft 21 is connected to the third gear 75.The power transferred by the low-speed shaft 65 of the reduction gearbox 6 is input by the first gear 73, the first gear 73 drives the third gear 75 to rotate by the second gear 74, and the third gear 75 drives the rotation shaft 21 to rotate, so that the driving motor 5 drives the steering gearbox 7 to drive the cover body 2 to flip, thereby realizing the automatic flip of the roaster. It is simple in structure, difficult to damage and durable, and the service life can be effectively ensured.

In an additional embodiment, the rotation limiting device 8 comprises a small semi-circular projection 81 and a large semi-circular projection 82 which are arranged opposite to each other on the outer end cover 71. Limiting switches 83 electrically connected to the control system are provided at clearances between the small semi-circular projection 81 and two ends of the large semi-circular projection 82. A circular rotation block 84 which is fitted with the small semi-circular projection and driven to rotate by the steering gearbox 7 is further provided within the small semi-circular projection 81. A 90° sector block 85 which is integrated with the circular rotation block and fitted with the large semi-circular projection 82 is provided in an outer circle of the rotation block 84. During the flipping of the cover body 2, the second gear 74 drives the sector block 85 to rotate. Since the angle of divergence of the sector block 85 is 90° and two limiting switches 83 are provided at clearances between the small semi-circular projection 81 and two ends of the large semi-circular projection 82, respectively, the sector block 85 can only rotate at 90°. During the flipping of the cover body 2, the sector block 85 starts to rotate from one end. When the sector block 85 comes into contact with the limiting switch 83 at the other end, the limiting switch 83 controls the driving motor 5 to stop operating by the control system, so that the 90° flip and the flip action of the cover body 2 are stopped automatically. By setting the flip angle of the cover body 2 as 90°, the cover body 2 moves back and forth between a position the cover body is just closed and a position the cover body is upright. By the rotation limiting structure 8 of the above structure, the cover body is stopped automatically when it flips in place. As a result, the flip precision of the toaster is effectively improved, the backward flip of the cover body 2 is avoided, and the space occupation is reduced.

In fact, since the power-off control of the driving motor 5 has a delay, the rotation cannot be stopped immediately and completely after the power-off. When the rotation limiting device 8 stop the rotation of the second gear 74 in the steering gearbox 7, it is likely to damage the driving motor 5 due to the increased load if the steering gearbox 7 cannot be disconnected from the driving motor 5.As an improvement to the above technical solution, an electromagnetic clutch 9 electrically connected to the control system is provided between the reduction gearbox 6 and the steering gearbox 7, and two ends of the electromagnetic clutch 9 are connected to the reduction gearbox 6 and the steering gearbox 7, respectively.

By providing the electromagnetic clutch 9 between the reduction gearbox 6 and the steering gearbox 7, the reduction gearbox 6 can be quickly connected to or disconnected from the steering gearbox 7 by the electromagnetic clutch 9, so that it is convenient to timely disconnect the reduction gearbox 6 from the steering gearbox 7 after the cover body 2 flips in place. Consequently, the driving motor 5 is effectively prevented from burnout, and the service life of the driving motor 5 is prolonged. When it is required to connect the reduction gearbox 6 to the steering gearbox 7, the control system controls the electromagnetic clutch 9 to connect the reduction gearbox 6 to the steering gearbox 7. This is very convenient.

Specifically, the electromagnetic clutch 9 comprises a driven clutch disc 91 in axially movable connection to the low-speed shaft 65 of the reduction gearbox 6 and a driving clutch disc 92 connected to the first gear 73 of the steering gearbox 7. Clutch teeth engaged and fitted with each other are formed on end faces of the driven clutch disc 91 and the driving clutch disc 92. An electromagnet 93 is provided on the driving clutch disc 92, and an iron chuck 94 is provided on the driven clutch disc 91. The electromagnet 93 is electrically connected to the control system. When the control system controls the electromagnet 93 to be powered on, the electromagnet 93 generates a magnetic force and attracts the iron chuck 94, and the iron chuck 94 drives the driven clutch disc 91 to engage with the driving clutch disc 92.

As a result, the connection of the reduction gearbox 6 to the steering gearbox 7 is realized, and it is convenient for power transfer, so that the power output from the driving motor 5 is transferred to the steering gearbox 7 and the automatic flip of the roaster is realized by the driving motor 5. When the control system controls the electromagnet 93 to be powered off, the electromagnet 93 has no magnetic force, and the rotational inertia of the low-speed shaft 65 of the reduction gearbox 6 makes the driven clutch disc 91 leave the driving clutch disc 92. As a result, the disconnection of the reduction gearbox 6 from the steering gearbox 7 is realized, and the driving motor 5 is prevented from burnout.

## Claims

1. An automatic flip toaster, comprising a toaster body (1), a cover body (2) rotatably connected to a rear portion of the toaster body (1), a wire rack (3) arranged in the toaster body (1), heating tubes (4) arranged below the wire rack (3) and on a lower side of the cover body (2), and a control system, **characterized in that**:
a driving motor (5), a reduction gearbox (6) connected to the driving motor (5) and a steering gearbox (7) connected to the reduction gearbox (6) are internally arranged in the rear portion of the toaster body (1);
an output end of the steering gearbox (7) is connected to a rotation shaft (21) of the cover body (2), and a rotation limiting device (8) is arranged on an outer end cover (71); and
the heating tubes (4), the driving motor (5) and the rotation limiting device (8) are electrically connected to the control system.

2. The automatic flip toaster according to claim 1, **characterized in that**:
the reduction gearbox (6) comprises an outer gear ring (61) and a planet gear set (62) engaged with the outer gear ring (61) ;
an input end cover (63) and an output end cover (64) are arranged at two ends of the outer gear ring (61), respectively;
an input through hole and an output through hole are formed on the input end cover (63) and the output end cover (64), respectively;
an output shaft (51) of the driving motor (5) is connected to one end of the planet gear set (62) through the input through hole; and
a low-speed shaft (65) at the other end of the planet gear set (62) passes through the output through hole and then positions within the output through hole by an output bearing (66) .

3. The automatic flip toaster according to claim 1, **characterized in that**:
the steering gearbox (7) comprises a box body (72), a first gear (73), a second gear (74) and a third gear (75);
the three gears are arranged in the box body (72) and successively engaged with each other;
the outer end cover (71) is covered on the box body (72); the first gear (73) is connected to the reduction gearbox (6) ; and
the rotation shaft (21) is connected to the third gear (75) .

4. The automatic flip toaster according to claim 1, **characterized in that**:
the rotation limiting device (8) comprises a small semi-circular projection (81) and a large semi-circular projection (82) which are arranged opposite to each other on the outer end cover (71);
limiting switches (83) are arranged at clearances between the small semi-circular projection (81) and two ends of the large semi-circular projection (82);
a circular rotation block (84) which is fitted with the small semi-circular projection (81) and driven to rotate by the steering gearbox (7) is arranged within the small semi-circular projection (81);
a 90° sector block (85) which is integrated with the circular rotation block (84) and fitted with the large semi-circular projection (82) is arranged in an outer circle of the rotation block (84); and
the limiting switches (83) are electrically connected to the control system.

5. The automatic flip toaster according to any one of claims 1 to 4, **characterized in that**:
an electromagnetic clutch (9) electrically connected to the control system is arranged between the reduction gearbox (6) and the steering gearbox (7); and
two ends of the electromagnetic clutch (9) are connected to the reduction gearbox (6) and the steering gearbox (7), respectively.

6. The automatic flip toaster according to claim 5, **characterized in that**:
the electromagnetic clutch (9) comprises a driven clutch disc (91) in axially movable connection to the reduction gearbox (6) and a driving clutch disc (92) connected to the steering gearbox (7);
clutch teeth engaged and fitted with each other are formed on end faces of the driven clutch disc (91) and the driving clutch disc (92);
an electromagnet (93) is arranged on the driving clutch disc (92), and an iron chuck (94) is arranged on the driven clutch disc (91); and
the electromagnet (93) is electrically connected to the control system.

7. The automatic flip toaster according to claim 1, **characterized in that**:
a crumb receiving port communicated with the inside is formed on one side of the toaster body (1); and
a crumb receiving plate (11) which can be pulled out from the crumb receiving port is arranged in the toaster body (1) below the heating tubes (4).

8. The automatic flip toaster according to claim 1, **characterized in that**:
cylindrical reflective tiles (41) are arranged above the heating tubes (4) on the cover body (2);
reflective sheets (42) which are inclined downward in opposite directions are arranged on two sides of the heating tubes (4) on the toaster body (1); and
an anti-sticking mesh enclosure (43) is arranged on an outer side of each of the heating tubes (4).

9. The automatic flip toaster according to claim 1, **characterized in that**:
a resting edge (12) is arranged in an upper portion of the toaster body (1), and the wire rack (3) is placed on the resting edge (12).

10. The automatic flip toaster according to claim 1, **characterized in that**:
a control panel connected to the control system is arranged on the toaster body (1); and
a display screen (13) and control buttons (14) are arranged on the control panel.

## Patentansprüche

1. Automatischer Klapptoaster, umfassend einen Toasterkörper (1), einen Deckelkörper (2), der mit einem hinteren Abschnitt des Toasterkörpers (1) drehbar verbunden ist, ein Drahtgestell (3), das in dem Toasterkörper (1) angeordnet ist, Heizrohre (4), die unter dem Drahtgestell (3) und an einer unteren Seite des Deckelkörpers (2) angeordnet sind, und ein Steuerungssystem,
**dadurch gekennzeichnet, dass**:
ein Antriebsmotor (5), ein Reduktionsgetriebe (6), das mit dem Antriebsmotor (5) verbunden ist, und ein Lenkgetriebe (7), das mit dem Reduktionsgetriebe (6) verbunden ist, innen in dem hinteren Abschnitt des Toasterkörpers (1) angeordnet sind;
ein Ausgangsende des Lenkgetriebes (7) mit einer Drehwelle (21) des Deckelkörpers (2) verbunden ist und eine Drehbegrenzungsvorrichtung (8) an einer äußeren Endabdeckung (71) angeordnet ist; und
die Heizrohre (4), der Antriebsmotor (5) und die Drehbegrenzungsvorrichtung (8) mit dem Steuerungssystem elektrisch verbunden sind.

2. Automatischer Klapptoaster nach Anspruch 1, **dadurch gekennzeichnet, dass**:
das Reduktionsgetriebe (6) einen äußeren Zahnring (61) und einen Planetenradsatz (62), der mit dem äußeren Zahnring (61) in Eingriff steht, umfasst;
eine Eingangsendabdeckung (63) bzw. eine Ausgangsendabdeckung (64) an zwei Enden des äußeren Zahnrings (61) angeordnet sind;
ein Eingangsdurchgangsloch und ein Ausgangsdurchgangsloch an der Eingangsendabdeckung (63) bzw. der Ausgangsendabdeckung (64) ausgebildet sind;
eine Ausgangswelle (51) des Antriebsmotors (5) durch das Eingangsdurchgangsloch mit einem Ende des Planetenradsatzes (62) verbunden ist; und
eine langsam laufende Welle (65) an dem anderen Ende des Planetenradsatzes (62) durch das Ausgangsdurchgangsloch verläuft und dann durch ein Ausgangslager (66) innerhalb des Ausgangsdurchgangslochs positioniert ist.

3. Automatischer Klapptoaster nach Anspruch 1, **dadurch gekennzeichnet, dass**:
das Lenkgetriebe (7) einen kastenförmigen Körper (72), ein erstes Zahnrad (73), ein zweites Zahnrad (74) und ein drittes Zahnrad (75) umfasst;
die drei Zahnräder in dem kastenförmigen Körper (72) angeordnet und aufeinanderfolgend miteinander in Eingriff stehen;
die äußere Endabdeckung (71) den kastenförmigen Körper (72) abdeckt;
das erste Zahnrad (73) mit dem Reduktionsgetriebe (6) verbunden ist; und
die Drehwelle (21) mit dem dritten Zahnrad (75) verbunden ist.

4. Automatischer Klapptoaster nach Anspruch 1, **dadurch gekennzeichnet, dass**:
die Drehbegrenzungsvorrichtung (8) einen kleinen halbkreisförmigen Vorsprung (81) und einen großen halbkreisförmigen Vorsprung (82) umfasst, die an der äußeren Endabdeckung (71) einander entgegengesetzt angeordnet sind;
Begrenzungsschalter (83) in Zwischenräumen zwischen dem kleinen halbkreisförmigen Vorsprung (81) und zwei Enden des großen halbkreisförmigen Vorsprungs (82) angeordnet sind;
ein kreisförmiger Drehblock (84), der an den kleinen halbkreisförmigen Vorsprung (81) angepasst ist und durch das Lenkgetriebe (7) angetrieben wird, um sich zu drehen, innerhalb des kleinen halbkreisförmigen Vorsprungs (81) angeordnet ist;
ein 90°-Sektorblock (85), der mit dem kreisförmigen Drehblock (84) integriert und an den großen halbkreisförmigen Vorsprung (82) angepasst ist, in einem Außenkreis des Drehblocks (84) angeordnet ist; und
die Begrenzungsschalter (83) mit dem Steuerungssystem elektrisch verbunden sind.

5. Automatischer Klapptoaster nach einem beliebigen der Ansprüche 1 bis 4, **dadurch gekennzeichnet, dass**:
eine elektromagnetische Kupplung (9), die mit dem Steuerungssystem elektrisch verbunden ist, zwischen dem Reduktionsgetriebe (6) und dem Lenkgetriebe (7) angeordnet ist; und
zwei Enden der elektromagnetischen Kupplung (9) mit dem Reduktionsgetriebe (6) bzw. dem Lenkgetriebe (7) verbunden sind.

6. Automatischer Klapptoaster nach Anspruch 5, **dadurch gekennzeichnet, dass**:
die elektromagnetische Kupplung (9) eine angetriebene Kupplungsscheibe (91) in axial beweglicher Verbindung mit dem Reduktionsgetriebe (6) und eine antreibende Kupplungsscheibe (92), die mit dem Lenkgetriebe (7) verbunden ist, umfasst;
Kupplungszähne, die miteinander in Eingriff stehen und aneinander angepasst sind, an Endflächen der angetriebenen Kupplungsscheibe (91) und der antreibenden Kupplungsscheibe (92) ausgebildet sind;
ein Elektromagnet (93) an der antreibenden Kupplungsscheibe (92) angeordnet ist, und ein Eisenfutter (94) an der angetriebenen Kupplungsscheibe (91) angeordnet ist; und
der Elektromagnet (93) mit dem Steuerungssystem elektrisch verbunden ist.

7. Automatischer Klapptoaster nach Anspruch 1, **dadurch gekennzeichnet, dass**:
eine Krümelaufnahmeöffnung, die mit dem Inneren in Verbindung steht, an einer Seite des Toasterkörpers (1) ausgebildet ist; und
eine Krümelaufnahmeplatte (11), die aus der Krümelaufnahmeöffnung herausgezogen werden kann, in dem Toasterkörper (1) unterhalb der Heizrohre (4) angeordnet ist.

8. Automatischer Klapptoaster nach Anspruch 1, **dadurch gekennzeichnet, dass**:
zylindrische reflektierende Kacheln (41) oberhalb der Heizrohre (4) an dem Deckelkörper (2) angeordnet sind;
reflektierende Folien (42), die in entgegengesetzte Richtungen abwärts geneigt sind, an zwei Seiten der Heizrohre (4) an dem Toasterkörper (1) angeordnet sind; und
eine Antihaftgittereinhausung (43) an einer Außenseite jedes der Heizrohre (4) angeordnet ist.

9. Automatischer Klapptoaster nach Anspruch 1, **dadurch gekennzeichnet, dass**:
eine Auflagekante (12) in einem oberen Abschnitt des Toasterkörpers (1) angeordnet ist und das Drahtgestell (3) auf die Auflagekante (12) aufgelegt ist.

10. Automatischer Klapptoaster nach Anspruch 1, **dadurch gekennzeichnet, dass**:
ein Bedienfeld, das mit dem Steuerungssystem verbunden ist, an dem Toasterkörper (1) angeordnet ist; und
an dem Bedienfeld ein Display (13) und Bedientasten (14) angeordnet sind.

## Revendications

1. Grille-pain rabattable automatique, comprenant un corps de grille-pain (1), un corps de couvercle (2) relié de manière rotative à une partie arrière du corps de grille-pain (1), une grille (3) agencée dans le corps de grille-pain (1), des tubes chauffants (4) agencés au-dessous de la grille (3) et sur un côté inférieur du corps de couvercle (2), et un système de commande, **caractérisé en ce que** :
un moteur d'entraînement (5), une boîte de réduction (6) reliée au moteur d'entraînement (5) et une boîte d'orientation (7) reliée à la boîte de réduction (6) sont agencés de manière interne dans la partie arrière du corps de grille-pain (1) ;
une extrémité de sortie de la boîte d'orientation (7) est reliée à un arbre de rotation (21) du corps de couvercle (2), et un dispositif de limitation de rotation (8) est agencé sur un couvercle d'extrémité externe (71) ; et
les tubes chauffants (4), le moteur d'entraînement (5) et le dispositif de limitation de rotation (8) sont électriquement connectés au système de commande.

2. Grille-pain rabattable automatique selon la revendication 1, **caractérisé en ce que** :
la boîte de réduction (6) comprend une couronne externe (61) et un jeu de satellites (62) mis en prise avec la couronne externe (61) ;
un couvercle d'extrémité d'entrée (63) et un couvercle d'extrémité de sortie (64) sont agencés à deux extrémités de la couronne externe (61), respectivement ;
un trou traversant d'entrée et un trou traversant de sortie sont formés sur le couvercle d'extrémité d'entrée (63) et le couvercle d'extrémité de sortie (64), respectivement ;
un arbre de sortie (51) du moteur d'entraînement (5) est relié à une extrémité du jeu de satellites (62) à travers le trou traversant d'entrée ; et
un arbre à basse vitesse (65) à l'autre extrémité du jeu de satellites (62) traverse le trou traversant de sortie et se positionne ensuite à l'intérieur du trou traversant de sortie par un palier de sortie (66).

3. Grille-pain rabattable automatique selon la revendication 1, **caractérisé en ce que** :
la boîte d'orientation (7) comprend un corps de boîte (72), un premier engrenage (73), un deuxième engrenage (74) et un troisième engrenage (75) ;
les trois engrenages sont agencés dans le corps de boîte (72) et sont successivement mis en prise les uns avec les autres ;
le couvercle d'extrémité externe (71) est placé sur le corps de boîte (72) ;
le premier engrenage (73) est relié à la boîte de réduction (6) ; et
l'arbre de rotation (21) est relié au troisième engrenage (75).

4. Grille-pain rabattable automatique selon la revendication 1, **caractérisé en ce que** :
le dispositif de limitation de rotation (8) comprend une petite saillie semi-circulaire (81) et une grande saillie semi-circulaire (82) qui sont agencées de manière opposée l'une à l'autre sur le couvercle d'extrémité externe (71) ;
des commutateurs de limitation (83) sont agencés au niveau d'espaces libres entre la petite saillie semi-circulaire (81) et deux extrémités de la grande saillie semi-circulaire (82) ;
un bloc de rotation circulaire (84) qui est ajusté avec la petite saillie semi-circulaire (81) et entraîné en rotation par la boîte d'orientation (7) est agencé à l'intérieur de la petite saillie semi-circulaire (81) ;
un bloc de secteur à 90° (85) qui est solidaire du bloc de rotation circulaire (84) et ajusté avec la grande saillie semi-circulaire (82) est agencé dans un cercle externe du bloc de rotation (84) ; et
les commutateurs de limitation (83) sont électriquement connectés au système de commande.

5. Grille-pain rabattable automatique selon l'une quelconque des revendications 1 à 4, **caractérisé en ce que** :
un embrayage électromagnétique (9) électriquement connecté au système de commande est agencé entre la boîte de réduction (6) et la boîte d'orientation (7) ; et
deux extrémités de l'embrayage électromagnétique (9) sont reliées à la boîte de réduction (6) et à la boîte d'orientation (7), respectivement.

6. Grille-pain rabattable automatique selon la revendication 5, **caractérisé en ce que** :
l'embrayage électromagnétique (9) comprend un disque d'embrayage entraîné (91) en liaison axialement mobile avec la boîte de réduction (6) et un disque d'embrayage d'entraînement (92) relié à la boîte d'orientation (7) ;
des dents d'embrayage mises en prise et ajustées les unes avec les autres sont formées sur des faces d'extrémité du disque d'embrayage entraîné (91) et du disque d'embrayage d'entraînement (92) ;
un électroaimant (93) est agencé sur le disque d'embrayage d'entraînement (92), et un mandrin en fer (94) est agencé sur le disque d'embrayage entraîné (91) ; et
l'électroaimant (93) est électriquement connecté au système de commande.

7. Grille-pain rabattable automatique selon la revendication 1, **caractérisé en ce que** :
un orifice de réception de miettes qui communique avec l'intérieur est formé sur un côté du corps de grille-pain (1) ; et
une plaque de réception de miettes (11) qui peut être tirée hors de l'orifice de réception de miettes est agencée dans le corps de grille-pain (1) au-dessous des tubes chauffants (4).

8. Grille-pain rabattable automatique selon la revendication 1, **caractérisé en ce que** :
des tuiles réfléchissantes cylindriques (41) sont agencées au-dessus des tubes chauffants (4) sur le corps de couvercle (2) ;
des feuilles réfléchissantes (42) qui sont inclinées vers le bas dans des directions opposées sont agencées sur deux côtés des tubes chauffants (4) sur le corps de grille-pain (1) ; et
une enceinte maillée antiadhérente (43) est agencée sur un côté externe de chacun des tubes chauffants (4).

9. Grille-pain rabattable automatique selon la revendication 1, **caractérisé en ce que** :
un bord d'appui (12) est agencé dans une partie supérieure du corps de grille-pain (1), et la grille (3) est placée sur le bord d'appui (12).

10. Grille-pain rabattable automatique selon la revendication 1, **caractérisé en ce que** :
un panneau de commande connecté au système de commande est agencé sur le corps de grille-pain (1) ; et
un écran d'affichage (13) et des boutons de commande (14) sont agencés sur le panneau de commande.
